Europäisches Patentamt

European Patent Office

Office européen des brevets

(11) Veröffentlichungsnummer: **0 159 760**
**A2**

(12) # EUROPÄISCHE PATENTANMELDUNG

(21) Anmeldenummer: 85200597.4

(22) Anmeldetag: 19.04.85

(51) Int. Cl.⁴: **B 01 D 53/34**

(30) Priorität: 27.04.84 DE 3415721

(43) Veröffentlichungstag der Anmeldung: 30.10.85
Patentblatt 85/44

(84) Benannte Vertragsstaaten: BE CH DE FR LI LU NL

(71) Anmelder: **METALLGESELLSCHAFT AG,**
**Reuterweg 14 Postfach 3724, D-6000 Frankfurt/M.1 (DE)**

(72) Erfinder: **Graubner, Hans Joachim,**
**Rother-Weingartenweg 48, D-6232 Bad Soden 2 (DE)**

(74) Vertreter: **Rieger, Harald, Dr., Reuterweg 14,**
**D-6000 Frankfurt am Main (DE)**

(54) **Verfahren zur Reduzierung der Deponiemengen von staubförmigen Rückständen aus Rauchgasreinigungsanlagen.**

(57) Zur Verminderung der Deponiemengen von Rückständen aus Rauchgasreinigungsanlagen, die neben Schadstoffen noch nennenswerte Anteile reaktionsfähiger Chemikalien enthalten, wird vorgeschlagen, die staubförmigen Rückstände zusammen mit frischen Chemikalien aufzuschlämmen und der Waschflüssigkeit einer nass arbeitenden Rauchgasreinigungsanlage beizugeben, wobei der in den Rückständen enthaltene noch reaktionsfähige Anteil der Chemikalie zur Neutralisation und Aktivierung der Waschflüssigkeit dient und dabei wesentlich besser ausgenutzt wird als es bei trockenen Verfahren möglich ist. Auf diese Weise können nicht nur die Deponiemengen verringert, sondern auch erhebliche Einsparungen beim Verbrauch frischer Chemikalien erzielt werden.

—1—

METALLGESELLSCHAFT AG                26.April 1984
Reuterweg 14                         MLK/OKU (1486P)

6000 Frankfurt/Main 1


Prov.Nr. 9097 LT


Verfahren zur Reduzierung der Deponiemengen von staubförmigen Rückständen aus Rauchgasreinigungsanlagen

Die Erfindung bezieht sich auf ein Verfahren zur Reduzierung der Deponiemengen von staubförmigen Rückständen aus
Rauchgasreinigungsanlagen, die neben Schadstoffen noch
nennenswerte Anteile an reaktionsfähigen Chemikalien, insbesondere $Ca(OH)_2$ enthalten.

Zur Abbindung von Schadstoffen in Abgasen aus Industrieöfen, Kraftwerks- und Müllverbrennungsanlagen werden häufig Chemikalien, wie $Ca(OH)_2$, $CaCO_3$ und $NaOH$ in den
Abgasstrom eingebracht und in nachgeschalteten Gasreinigungseinrichtungen zusammen mit den Schadstoffen aus dem
Abgas wieder abgeschieden.

Bekannt sind "nasse Verfahren", bei denen die Chemikalien
in einer Trägerflüssigkeit aufgeschlämmt und in Tröpfchenform in den Gasstrom eingedüst werden, wo sie die Schadstoffe abbinden und wobei sie schließlich zusammen mit den
staubförmigen Verunreinigungen des Gasstromes als Schlamm
anfallen. Bei diesen Verfahren ist die Umsetzung der Chemikalien mit den Schadstoffen am wirkungsvollsten und
daher der spezifische Chemikalienverbrauch am geringsten.
Die nassen Verfahren erfordern aber eine Aufarbeitung der
Schlämme, die in vielen Fällen als zu umständlich und aufwendig angesehen wird.

Bei den "trockenen Verfahren", z.B. in Wirbelschichtanlagen, fallen die Rückstände zwar trocken, staubförmig an, es werden aber im Verhältnis zu den Schadstoffanteilen im Rauchgas wesentlich höhere Chemikalienmengen benötigt, da die chemischen Reaktionen im Vergleich zu den nassen Verfahren sehr viel unvollkommener sind.

Schließlich gibt es noch "halbtrockene Verfahren", bei denen die Chemikalien als Aufschlämmung in den Abgasstrom eingedüst werden. Dabei findet nach dem Abbinden der Schadstoffe eine Trocknung der Rückstände unter gleichzeitiger Abkühlung der Abgase statt, so daß die Rückstände auch hier schließlich trocken und staubförmig anfallen. Der spezifische Chemikalienverbrauch dieser "halbtrockenen Verfahren" liegt zwischen dem der nassen und der trockenen Verfahren.

Da die trockenen, bzw. halbtrockenen Verfahren zwangsläufig mit einem hohen Chemikalienüberschuß betrieben werden müssen, enthalten die dabei staubförmig anfallenden Rückstände neben den gebundenen Schadstoffen und Flugasche noch einen hohen Anteil reaktionsfähiger Chemikalien, wodurch die Verfahren unnötig verteuert werden und außerdem unnötig hohe Rückstandsmengen entstehen, deren Endlagerung wiederum mit erheblichem Aufwand verbunden ist. Wegen des hohen Anteils an Schadstoffen müssen derartige Rückstände auf Sonderdeponien gelagert werden, wobei neben erheblichen Transportkosten auch hohe Kosten für die Endlagerung anfallen. Es ist daher verständlich, wenn man große Anstrengungen unternimmt, die schadstoffhaltigen Rückstände zu verringern.

Die geringsten Rückstandsmengen fallen wie gesagt bei den nassen Verfahren an, die wegen des höheren Investitionsbedarfs aber erst von einer bestimmten Anlagengröße an wirt-

- 3 -

schaftlich sind. Sie werden auch wegen der etwas komplizierteren Handhabung in anlagetechnischen Grenzfällen häufig abgelehnt. Davon abgesehen, haben trocken und halbtrocken arbeitende Verfahren ihre besonderen Anwendungsbereiche und können in bestehenden Anlagen auch nicht ohne weiteres durch nasse Verfahren ersetzt werden. Es besteht somit das bereits erwähnte Problem, daß in großen Mengen schadstoffhaltige staubförmige Rückstände anfallen, die noch erhebliche Anteile reaktionsfähiger Chemikalien enthalten. Der Erfindung liegt die Aufgabe zugrunde, die damit verbundenen Nachteile zu beseitigen.

Zur Lösung dieser Aufgabe wird bei einem Verfahren der eingangs genannten Art vorgeschlagen, daß die staubförmigen Rückstände zusammen mit frischen Chemikalien, insbesondere $Ca(OH)_2$ aufgeschlämmt und der Waschflüssigkeit für den Waschturm einer Reinigungseinrichtung für die Abgase aus einer Müllverbrennungsanlage zur Neutralisation und Aktivierung beigegeben werden. Der anfallende Schlamm wird dann in bekannter Weise durch den Abgasstrom der Müllverbrennungsanlage in einem Sprühtrockner getrocknet und teilweise aus dem Abgasstrom abgeschieden, die im Rauchgasstrom verbleibenden Rückstände weitgehend in einem nachgeschalteten Staubabscheider abgeschieden und zusammen mit den aus dem Sprühtrockner abgeschiedenen Rückstandsmengen zwischengelagert und schließlich einer geeigneten Deponie zugeführt.

Das Verfahren kann auch so durchgeführt werden, daß nur der schwach sedimentierende Anteil der Rückstände nach der Aufschlämmung in den Waschturm eingebracht und daß der stark sedimentierende Anteil zusammen mit dem im Waschturm anfallenden Schlamm in den Sprühtrockner eingegeben wird.

Bei Bedarf kann die Gaswäsche auch zweistufig durchgeführt werden, wobei dann die Rückstände nur in die in Gasströ-

- 4 -

mungsrichtung gesehen erste Waschstufe und/oder in den
Sprühturm eingebracht werden.

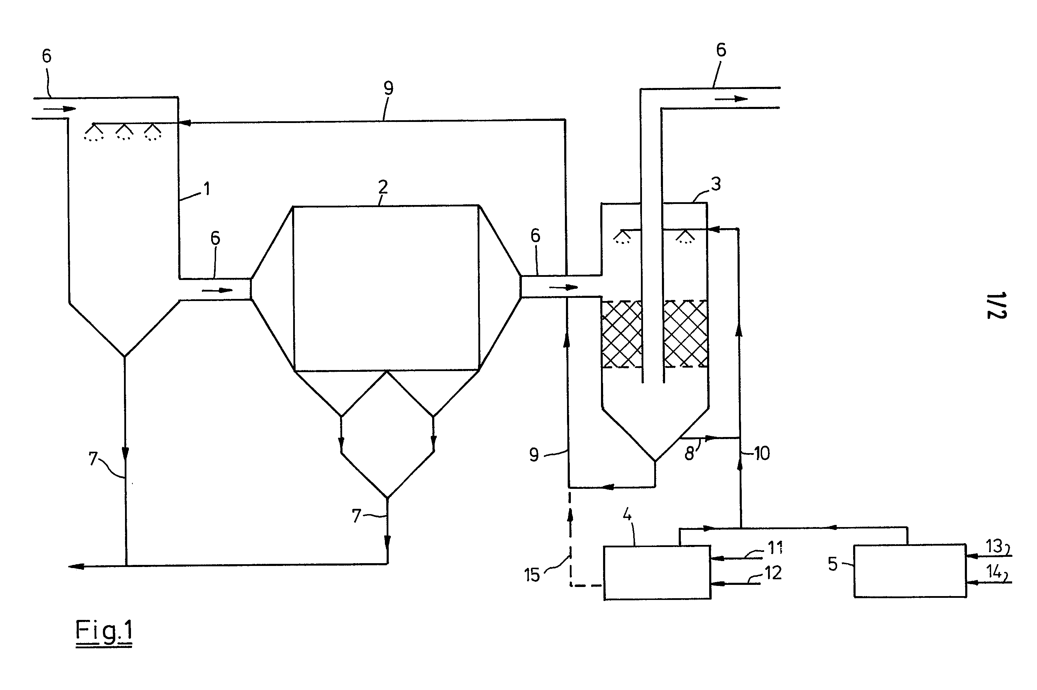

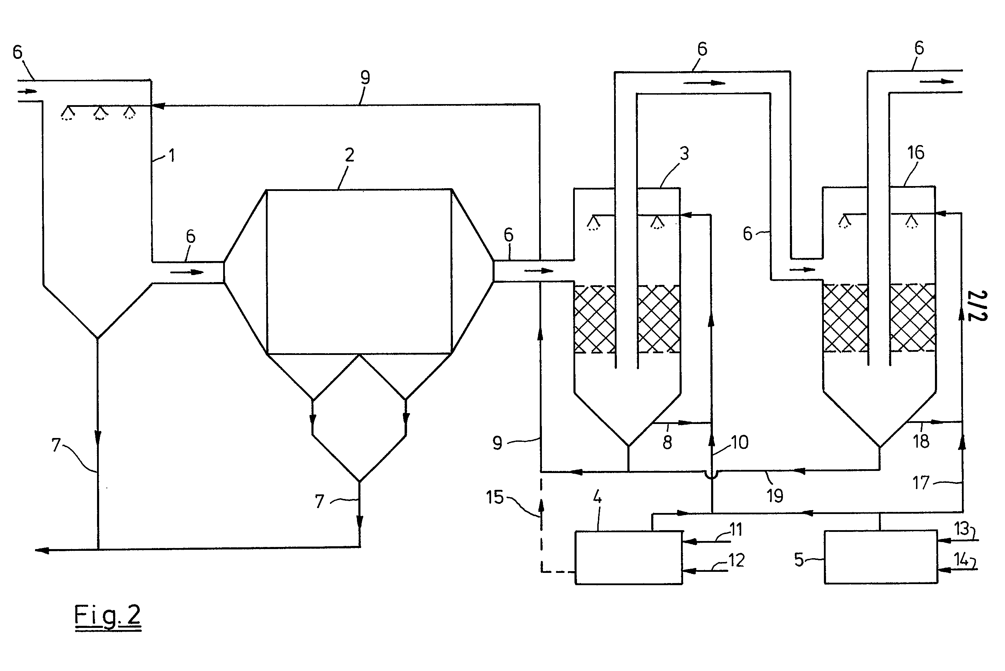

Weitere Einzelheiten und Vorteile werden anhand der Figuren 1 und 2 erläutert.

Figur 1 zeigt stark vereinfacht das Schaltbild einer
Rauchgasreinigungsanlage mit einstufiger Gaswäsche.

Figur 2 zeigt stark vereinfacht das Schaltbild einer
Rauchgasreinigungsanlage mit zweistufiger Gaswäsche.

Das zu reinigende Rauchgas strömt durch den Rauchgaskanal 6 von links nach rechts nacheinander durch den
Sprühtrockner 1, den Staubabscheider 2 und den Waschturm 3
und wird als Reingas an die Atmosphäre abgegeben. Über den
Mischbehälter 5 werden über die Leitung 13 Waschflüssigkeit und über die Leitung 14 frische Chemikalien in das
System eingeführt und über die Leitung 10 zum Waschturm 3
transportiert. Außerdem werden über die Leitung 12 trockene, staubförmige Rückstände und über die Leitung 11 Aufschlämm-Flüssigkeit in den Aufschlämmbehalter 4 eingbracht
und - gemischt mit der mit Chemikalien angereicherten
Waschflüssigkeit - über die Leitung 10 in den Waschturm 3
transportiert. Über die Leitung 8 wird das in den Waschturm 3 eingebrachte Gemisch im Kreislauf gefördert. Der im
Waschturm 3 anfallende Schlamm wird abgezogen und über die
Leitung 9 in den Sprühtrockner 1 eingebracht, wo die
Flüssigkeit im wesentlichen verdampft und dadurch eine
Abkühlung der Rauchgase bewirkt. Die im Sprühtrockner 1
anfallenden staubförmigen Rückstände werden zusammen mit
den im Staubabscheider 2 anfallenden Stäuben über die Leitungen 7 direkt auf eine Deponie geleitet oder aber
zunächst zwischengelagert.

- 5 -

Alternativ kann auch der stark sedimentierende Anteil aus
dem Aufschlämmbehälter 4 über die Leitung 15 direkt in die
Leitung 9 eingespeist und zum Sprühtrockner 1 geleitet
werden. In dem Fall wird nur der schwach sedimentierende
Anteil in den Wasch-Kreislauf (Leitungen 8, 10) eingebracht.

In Figur 2 ist die Schaltung gemäß Figur 1 durch einen
zweiten Waschturm 16 ergänzt, der bei besonders schwierig
zu reinigenden Rauchgasen erforderlich sein kann. Das aus
dem ersten Waschturm 3 kommende Rauchgas wird dann durch
den Rauchgaskanal 6 in den Waschturm 16 geleitet und erst
danach in die Atmosphäre abgegeben. Der Waschturm 16 wird
über die Leitung 17 mit Waschflüssigkeit und Chemikalien
aus dem Mischbehälter 5 versorgt, wobei über die Leitung 18 der Kreislauf aufrechterhalten wird. Der im Waschturm 16 anfallende Schlamm wird über die Leitung 19 in die
Leitung 9 geschickt und schließlich zusammen mit dem im
Waschturm 3 anfallenden Schlamm im Sprühtrockner 1 getrocknet. Es ist vorgesehen, daß der Waschturm 16 nicht
mit Rückständen aus dem Aufschlämmbehälter 4 beaufschlagt
wird. Er wird nur aus dem Mischbehälter 5, d.h. mit Waschflüssigkeit und frischen Chemikalien gespeist.

Zur weiteren Erläuterung der Vorteile des erfindungsgemäßen Verfahrens wird folgende einfache Modellrechnung
durchgeführt. Dabei beziehen sich alle angegebenen Mengen
auf die gleiche Zeiteinheit.

Es wird angenommen, daß bei einer trocken arbeitenden
Anlage 120 kg frische Chemikalien benötigt werden, von
denen aber nur 60 kg ausgenutzt werden, so daß aus der
Chemikalienzugabe eine Deponiemenge von 120 kg anfällt,
die nur zu 50 % ausgenutzt ist. Bei einer naß arbeitenden
Anlage werden 110 kg Chemikalien zugegeben, wovon nur 10 kg ungenutzt bleiben. Hier fällt also aus der Chemikalienzugabe eine Deponiemenge von 110 kg an, die zu rund 90 % ausgenutzt ist. Bei getrennter Fahrweise beträgt die gesamte Deponiemenge aus beiden Anlagen also 230 kg mit einem Anteil von 70 kg ungenutzten Chemikalien.

Betreibt man dagegen die naß arbeitende Anlage erfindungsgemäß wenigstens teilweise mit den Rückständen der trocken arbeitenden Anlage, so kann die erforderliche Zugabe von 110 kg aus der Rückstandsmenge der trocken arbeitenden Anlage in Höhe von 120 kg mit 60 kg noch reaktiven Chemikalien und 50 kg frischen Chemikalien bestehen. Dabei werden 60 kg frische Chemikalien gespart und außerdem die Gesamtrückstandsmenge auf 170 kg verringert.

Selbstverständlich sind die getroffenen Annahmen nicht zu verallgemeinern und es ist auch davon auszugehen, daß Mengenbilanzen nicht immer so glatt aufgehen wie im Rechenbeispiel angenommen. In jedem Fall wird aber die nochmalige Verwendung von Rückständen mit hohen, nicht reagierten Chemikalienanteilen aus trocken arbeitenden Anlagen bei der Beseitigung von Schadstoffen aus Abgasen in naß arbeitenden Anlagen zu einer Reduzierung von Rückständen und eine Einsparung frischer Chemikalien führen, was je nach Standort der Anlagen mit erheblichen wirtschaftlichen Vorteilen verbunden sein kann.

PATENTANSPRÜCHE

1. Verfahren zur Reduzierung der Deponiemengen von abgeschiedenen staubförmigen Rückständen aus Verbrennungsanlagen, die neben Schadstoffen noch nennenswerte
Anteile reaktionsfähiger Chemikalien, insbesondere
$Ca(OH)_2$ enthalten, dadurch gekennzeichnet, daß

   a) die staubförmigen Rückstände zusammen mit frischen
   Chemikalien, insbesondere $Ca(OH)_2$ aufgeschlämmt
   und der Waschflüssigkeit für den Waschturm einer
   Reinigungseinrichtung für die Abgase aus einer Müllverbrennungsanlage zur Neutralisation und Aktivierung beigegeben werden,

   b) der anfallende Schlamm in bekannter Weise durch den
   Abgasstrom der Müllverbrennungsanlage in einem
   Sprühtrockner getrocknet und teilweise aus dem
   Abgasstrom abgeschieden wird,

   c) die im Rauchgasstrom verbleibenden Rückstände weitgehend in einem nachgeschalteten Staubabscheider
   abgeschieden wird und

   d) mit den aus dem Sprühtrockner abgeschiedenen Rückstandsmengen zwischengelagert und schließlich einer
   geeigneten Deponie zugeführt werden.

2. Verfahren nach Anspruch 1, dadurch gekennzeichnet, daß
nur der schwach sedimentierte Anteil der Rückstände
nach der Aufschlämmung (4) in den Waschturm (3) eingebracht und daß der stark sedimentierte Anteil zusammen mit dem im Waschturm (3) anfallenden Schlamm in den Sprühtrockner (1) eingegeben wird.

3. Verfahren nach Anspruch 1 oder 2, dadurch gekennzeichnet, daß die Gaswäsche zweistufig durchgeführt wird und daß die Rückstände nur in die in Gasströmungsrichtung gesehen erste Waschstufe (3) und/oder in den Sprühtrockner (1) eingebracht werden.

1/2

Fig.1

0159760

Fig.2